# EUROPEAN PATENT APPLICATION

(11) **EP 4 530 895 A1**
(43) Date of publication of application: **02.04.2025**
(21) Application number: 24196539.1
(22) Date of filing: 26.08.2024
(51) Int. Cl.: G06F 21/10, G06F 21/12, G06F 21/60

(54) **APPARATUSES, DEVICES, METHODS, AND NON-TRANSITORY MACHINE-READABLE STORAGE MEDIA FOR PRESENTING CONTENT AND FOR A NODE OF A BLOCKCHAIN NETWORK**

(30) Priority: 26.09.2023 US 202318474282
(71) Applicant: INTEL Corporation, Santa Clara, CA 95054 (US)
(72) Inventor: POORNACHANDRAN, Rajesh, Portland, 97229 (US); CARRANZA, Marcos, Portland, 97229 (US)
(74) Representative: 2SPL Patentanwälte PartG mbB

(57) **Abstract**

Various examples relate to apparatuses, devices, methods, and non-transitory machine-readable storage media for presenting content and for a node of a blockchain network. An apparatus for presenting content is to obtain the content, obtain, from at least one decentralized application referenced by the content, at least one license for using the content, and present the content in accordance with the at least one license.

## Description

### Background

Many existing Digital Rights Management (DRM) mechanisms for premium protected content playback provide licenses and content for playback from a centralized DRM license server and from a content server. This includes "viral" user generated content (UGC) controlled by centralized entities, such as popular video hosting platforms, social networks, etc. Users generally to not have the ability to author, publish, track, consume & forward DRM content (e.g., content that is entirely user-generated or content that is generated as mash-up of content from other users or studies, combined with the user's own content) in a decentralized peer-to-peer manner.

Moreover, many existing DRM mechanisms may not easily support `fair-use' practices for content sharing, where snippets of content may be displayed and/or used without first obtaining permission or licenses. This may be due in part to existing DRM schemes that encrypt and/or protect the entire content stream with a single encryption key.

Content 'mash-ups' allow multiple content inputs to be 'mashed-up' to produce a new content stream containing elements of the input streams. Mash-ups and social sharing are generally not easily supported with current DRM schemes because the mashup artist must first obtain license for all input sources - even if only a fragment of the original content is to be included in the final product.

### Brief description of the Figures

Some examples of apparatuses and/or methods will be described in the following by way of example only, and with reference to the accompanying figures, in which:
- Fig. 1a: shows a schematic diagram of an example of an apparatus or device for presenting content, and of a presentation device comprising such an apparatus or device;
- Fig. 1b: shows a flow chart of an example of a method for presenting content;
- Fig. 2a: shows a schematic diagram of an example of an apparatus or device for a node of a blockchain network, and of a node comprising such an apparatus or device;
- Fig. 2b: shows a flow chart of an example of a method for a node of a blockchain network;
- Fig. 3: shows a schematic diagram of a centralized DRM licensing approach;
- Fig. 4: shows a high-level schematic diagram of an example of a use case supported by the proposed system architecture; and
- Fig. 5: shows a flow diagram of a DRM license/content key provisioning flow.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

In the following description, specific details are set forth, but examples of the technologies described herein may be practiced without these specific details. Well-known circuits, structures, and techniques have not been shown in detail to avoid obscuring an understanding of this description. "An example/example," "various examples/examples," "some examples/examples," and the like may include features, structures, or characteristics, but not every example necessarily includes the particular features, structures, or characteristics.

Some examples may have some, all, or none of the features described for other examples. "First," "second," "third," and the like describe a common element and indicate different instances of like elements being referred to. Such adjectives do not imply element item so described must be in a given sequence, either temporally or spatially, in ranking, or any other manner. "Connected" may indicate elements are in direct physical or electrical contact with each other and "coupled" may indicate elements co-operate or interact with each other, but they may or may not be in direct physical or electrical contact.

As used herein, the terms "operating", "executing", or "running" as they pertain to software or firmware in relation to a system, device, platform, or resource are used interchangeably and can refer to software or firmware stored in one or more computer-readable storage media accessible by the system, device, platform, or resource, even though the instructions contained in the software or firmware are not actively being executed by the system, device, platform, or resource.

The description may use the phrases "in an example/example," "in examples/examples," "in some examples/examples," and/or "in various examples/examples," each of which may refer to one or more of the same or different examples. Furthermore, the terms "comprising," "including," "having," and the like, as used with respect to examples of the present disclosure, are synonymous.

Various examples relate to a concept, e.g., a method and apparatus, for interoperable Digital Rights Management (DRM) for Web 2.0 and Web 3.0 (DRMW3.0). The present disclosure relates to one or more of Digital Rights Management (DRM), Web 3.0, Web 2.0, Blockchain, WASM (WebAssembly), Software Security, Monetization and Software-as-a-Service.

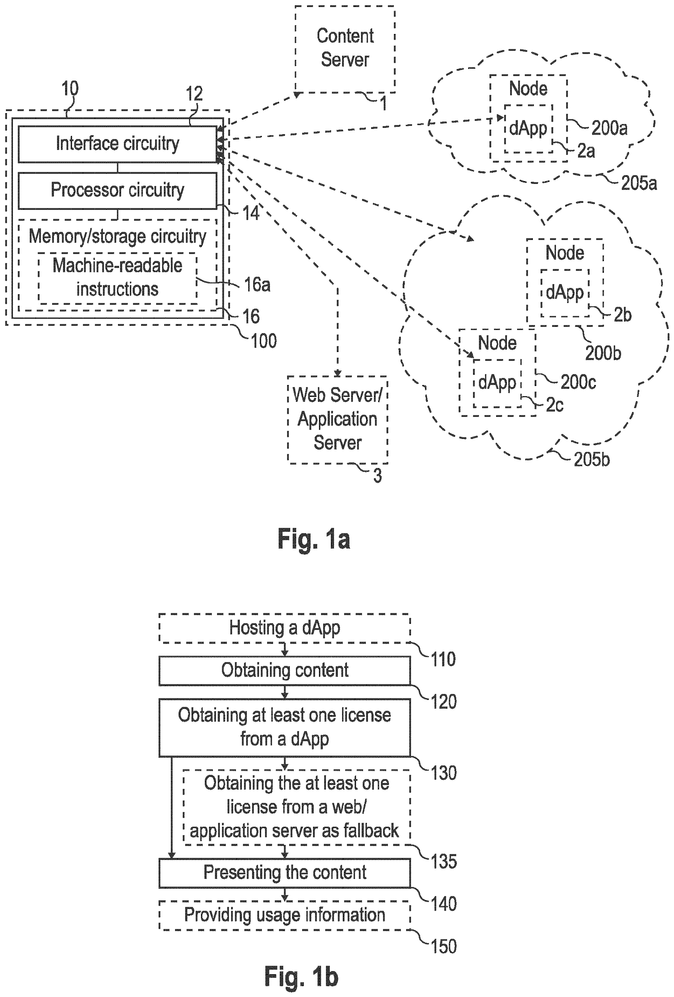

Fig. 1a shows a schematic diagram of an example of an apparatus 10 or device 10 for presenting content, and of a presentation device 100, such as a computer system or a mobile device, comprising such an apparatus 10 or device 10. Fig. 1a further shows a system comprising the apparatus 10 or device 10 and at least one distributed application (dApp or DApp) 2 (or apparatus 20 or device 20 hosting a dApp 2, or node 200 hosting a dApp 2). The apparatus 10 comprises circuitry to provide the functionality of the apparatus 10. For example, the circuitry of the apparatus 10 may be configured to provide the functionality of the apparatus 10. For example, the apparatus 10 of Fig. 1a comprises interface circuitry 12, processor circuitry 14, (optional) memory/storage circuitry 16. For example, the processor circuitry 14 may be coupled with the interface circuitry 12, with the memory/storage circuitry 16. For example, the processor circuitry 14 may provide the functionality of the apparatus, in conjunction with the interface circuitry 12 (for communicating with nodes 200a-200c of at least one blockchain network 205a, 205b, for communicating with a content server 1, and/or for communicating with a web server or application server 3), and the memory/storage circuitry 16 (for storing information, such as machine-readable instructions). Likewise, the device 10 may comprise means for providing the functionality of the device 10. For example, the means may be configured to provide the functionality of the device 10. The components of the device 10 are defined as component means, which may correspond to, or implemented by, the respective structural components of the apparatus 10. For example, the device 10 of Fig. 1b comprises means for processing 14, which may correspond to or be implemented by the processor circuitry 14, means for communicating 12, which may correspond to or be implemented by the interface circuitry 12, (optional) means for storing information 16, which may correspond to or be implemented by the memory or storage circuitry 16. In general, the functionality of the processor circuitry 14 or means for processing 14 may be implemented by the processor circuitry 14 or means for processing 14 executing machine-readable instructions. Accordingly, any feature ascribed to the processor circuitry 14 or means for processing 14 may be defined by one or more instructions of a plurality of machine-readable instructions. The apparatus 10 or device 10 may comprise the machine-readable instructions 16a, e.g., within the memory or storage circuitry 16 or means for storing information 16.

The processor circuitry 14 or means for processing 14 is to obtain the content. The processor circuitry 14 or means for processing 14 is to obtain, from at least one decentralized application 2 referenced by the content, at least one license for using the content. The processor circuitry 14 or means for processing 14 is to present the content in accordance with the at least one license.

Fig. 1b shows a flow chart of an example of a corresponding method for presenting content. The method comprises obtaining 120 the content. The method comprises obtaining 130, from at least one decentralized application 2 referenced by the content, at least one license for using the content. The method comprises presenting 140 the content in accordance with the at least one license. For example, the method may be performed by a presentation device 100, e.g., by an apparatus 10 or device 10 of a presentation device 100.

In the following, further details with respect to the apparatus 10, the device 10, the presentation device 100, the method, and a corresponding computer program will be introduced with reference to the apparatus 10 and the presentation device 100. Features introduced with reference to the apparatus 10 and/or presentation device 100 may likewise be included in the corresponding device 10, method and computer program.

Various examples of the present disclosure relate to licensing of digital content, such as video content, image content, virtual reality content, textual content or audio content. In the proposed concept, this is achieved in a decentralized manner, with the help of a blockchain-based architecture.

In general, the process starts with obtaining the content and the corresponding license(s) for presenting the content. For example, the at least one license may be used for decoding (e.g., decrypting) the content, e.g., with the help of a Trusted Execution Environment (TEE) of the processor circuitry. For example, the at least one license may be at least one of time-limited and usage-limited. The processor circuitry obtains the content, e.g., from the content server 1. For example, the content server may be a web server, streaming server, or other application server. Additionally, the content server may participate in a blockchain network, and provide the content via a decentralized application hosted by the content server. Accordingly, the processor circuitry may obtain the content from a decentralized application hosted by the content server 1.

In the present concept, various aspects are achieved with the help of decentralized applications. A decentralized application (DApp or dApp) is a computer application that operates on a decentralized network, such as a blockchain. Unlike traditional applications that are operated by a single entity and centralized servers, DApps are decentralized and run on a peer-to-peer network of computers. Decentralization means that no single entity controls the application, making it transparent, secure, and resistant to censorship or manipulation. DApps typically use blockchain technology to ensure that all transactions are verified and recorded immutably on a distributed ledger. Examples of DApps include cryptocurrency wallets and decentralized exchanges.

In some examples, the content is provided with reference to a smart contract that is associated with (e.g., that is referenced by, specified by) the content. This smart contract may be used to specify the license(s) required for presenting the content. In other words, the license(s) to be obtained may be defined in a smart contract associated with the content, the smart contract referencing the license(s). A smart contract is a self-executing contract with the terms of the agreement between buyer (or licensee) and seller (or licensor) being directly written into lines of code. The code and the agreements contained therein exist on a decentralized blockchain network, and when predetermined conditions are met, the smart contract may be executed automatically. For example, a smart contract may be a part of a dApp, i.e., a dApp may include on or more smart contracts. In the present case, the decentralized Application being used to provide the at least one license may include smart contracts to define the license terms to be met by the licensees.

The processor circuitry obtains (e.g., requests and receives), from the at least one decentralized application 2 referenced by the content, the at least one license for using the content. How the at least one license is obtained depends on the licenses required for presenting the content. In the simplest case of one license being required, the processor circuitry may obtain the license from a single decentralized application 2 hosted by a node 200 of a blockchain network 205. Similarly, if multiple licenses are required, but they are given by the same licensor (or agent/clearing house), multiple licenses can be obtained from the same dApp. In other words, the processor circuitry may obtain, if two or more licenses are to be obtained, at least two licenses from the same decentralized application 2a, 2b, 2c. This facilitates communication, as only one dApp needs to be contacted.

For example, if the content is a mash-up, comprising licensed material from multiple content providers, a license may be obtained from each content provider. For example, the licenses obtained from the two or more content providers may be defined in the aforementioned smart contract associated with the content. This may enable the presenting device to identify which licensors are to be contacted. The processor circuitry may obtain, if the content comprises components from two or more content providers, a license from each of the two or more content providers. As outlined above, in some cases, the licenses can be obtained from the same dApp. However, depending on the number of licenses and on the number of licensors, this can be extended to multiple nodes and multiple blockchain networks. For example, the processor circuitry may obtain, if two or more licenses are to be obtained, the two or more licenses from two or more decentralized applications 2b, 2c hosted by nodes 200b, 200c of the same blockchain network 205b.Alternatively, the licenses may be obtained from nodes of different blockchain networks. For example, the processor circuitry may obtain, if two or more licenses are to be obtained, the two or more licenses from two or more decentralized applications 2a, 2b hosted by nodes 200a, 200b of at least two different blockchain networks 205a, 205b. In this case, one or more blockchain bridge nodes may be used to obtain the licenses across different blockchain networks. By obtaining the licenses from different nodes and/or different blockchain networks, a high degree of flexibility and decentralization can be achieved.

To communicate with the decentralized application(s) providing the at least one license, the presenting device may participate in the respective blockchain network(s). For example, the presenting device may itself host a decentralized application, which is used for the purpose of obtaining the license(s). In other words, the processor circuitry may host a decentralized application, and to perform at least the act of obtaining the at least one license for using the content using the decentralized application. Accordingly, the method may comprise hosting 110 a decentralized application, and performing at least the act of obtaining the at least one license for using the content using the decentralized application.

In some cases, it may not be possible to obtain all (or some) of the licenses for presenting the content from a decentralized application. In this case, as a fallback option, a traditional licensing server may be used. For example, the processor circuitry may obtain the at least one license, if the at least one decentralized application is inaccessible, from the web server or application server 3 as a fallback mechanism. Accordingly, as further shown in Fig. 1b, the method may comprise obtaining 135 the at least one license, if the at least one decentralized application is inaccessible, from the web server or application server 3 as a fallback mechanism. Such a scenario may occur in geographic regions where licensing via decentralized application is not supported by the licensors, or where blockchain technology is forbidden.

After obtaining the license(s), the processor circuitry presents the content in accordance with the at least one license. For example, using the at least one license, the processor circuitry may obtain at least one decryption key for decrypting the content, decrypt the content and present the content. If the content comprises multiple components (e.g., a mash-up of different content, or audio and video), separate decryption keys may be obtained for the different components and used to decrypt the content.

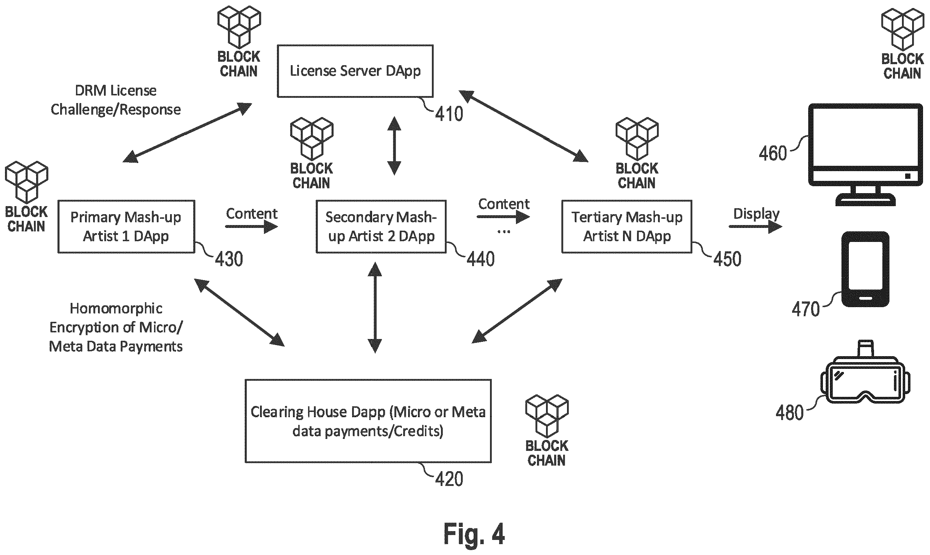

In many cases, licensors are interested in how their content fares, and are in particular interested in being alerted when their content goes viral. Therefore, as part of the licensing, the licensors may mandate the licensees to provide usage information on the use of the content. Accordingly, the processor circuitry may provide usage information on usage of the content to each of the two or more content providers. Accordingly, as further shown in Fig. 1b, the method may comprise providing 150 usage information on usage of the content to each of the two or more content providers. For example, as shown in Fig. 4, the usage information may be provided to the decentralized application(s) providing the at least one license.

The interface circuitry 12 or means for communicating 12 may correspond to one or more inputs and/or outputs for receiving and/or transmitting information, which may be in digital (bit) values according to a specified code, within a module, between modules or between modules of different entities. For example, the interface circuitry 12 or means for communicating 12 may comprise circuitry configured to receive and/or transmit information.

For example, the processor circuitry 14 or means for processing 14 may be implemented using one or more processing units, one or more processing devices, any means for processing, such as a processor, a computer or a programmable hardware component being operable with accordingly adapted software. In other words, the described function of the processor circuitry 14 or means for processing may as well be implemented in software, which is then executed on one or more programmable hardware components. Such hardware components may comprise a general-purpose processor, a Digital Signal Processor (DSP), a micro-controller, etc.

For example, the memory or storage circuitry 16 or means for storing information 16 may a volatile memory, e.g., random access memory, such as dynamic random-access memory (DRAM), and/or comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

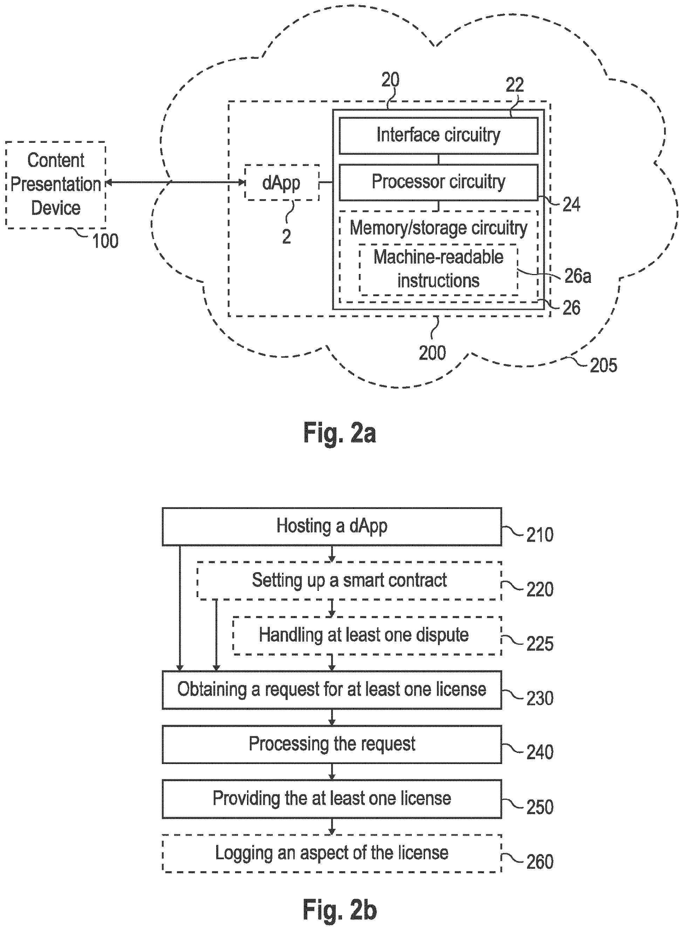

More details and aspects of the apparatus 10, device 10, method, a corresponding computer program and presentation device 100 are mentioned in connection with the proposed concept or one or more examples described above or below (e.g., Fig. 2a to 5). The apparatus 10, device 10, method, computer program and presentation device 100 may comprise one or more additional optional features corresponding to one or more aspects of the proposed concept, or one or more examples described above or below.

Fig. 2a shows a schematic diagram of an example of an apparatus 20 or device 20 for a node 200 of a blockchain network, and of a node 200 (i.e., a computer system configured to participate in a blockchain network) comprising such an apparatus 20 or device 20. Fig. 2a further shows a system comprising the apparatus 20 or device 20 and at least one presentation device 100. The apparatus 20 comprises circuitry to provide the functionality of the apparatus 20. For example, the circuitry of the apparatus 20 may be configured to provide the functionality of the apparatus 20. For example, the apparatus 20 of Fig. 2a comprises interface circuitry 22, processor circuitry 24, (optional) memory/storage circuitry 26. For example, the processor circuitry 24 may be coupled with the interface circuitry 22, with the memory/storage circuitry 26. For example, the processor circuitry 24 may provide the functionality of the apparatus, in conjunction with the interface circuitry 22 (for communicating with other nodes of the blockchain network 205 or of other blockchain network, and/or for communicating with the presentation device 100), and the memory/storage circuitry 26 (for storing information, such as machine-readable instructions). Likewise, the device 20 may comprise means for providing the functionality of the device 20. For example, the means may be configured to provide the functionality of the device 20. The components of the device 20 are defined as component means, which may correspond to, or implemented by, the respective structural components of the apparatus 20. For example, the device 20 of Fig. 2b comprises means for processing 24, which may correspond to or be implemented by the processor circuitry 24, means for communicating 22, which may correspond to or be implemented by the interface circuitry 22, (optional) means for storing information 26, which may correspond to or be implemented by the memory or storage circuitry 26. In general, the functionality of the processor circuitry 24 or means for processing 24 may be implemented by the processor circuitry 24 or means for processing 24 executing machine-readable instructions. Accordingly, any feature ascribed to the processor circuitry 24 or means for processing 24 may be defined by one or more instructions of a plurality of machine-readable instructions. The apparatus 20 or device 20 may comprise the machine-readable instructions 26a, e.g., within the memory or storage circuitry 26 or means for storing information 26.

The processor circuitry 24 or means for processing is to host a decentralized application 2 for managing licenses for content. The processor circuitry 24 or means for processing is to obtain, from a content presentation device 100, a request for at least one license for presenting content. The processor circuitry 24 or means for processing is to process, using the decentralized application, the request for the at least one license for presenting the content. The processor circuitry 24 or means for processing is to provide, using the decentralized application, the at least one license for presenting the content to the presentation device 100.

Fig. 2b shows a flow chart of an example of a corresponding method for the node 200 of the blockchain network. The method comprises hosting 210 the decentralized application 2 for managing licenses for content. The method comprises obtaining 230, from the content presentation device 100, the request for at least one license for presenting content. The method comprises processing 240, using the decentralized application, the request for the at least one license for presenting the content. The method comprises providing 250, using the decentralized application, the at least one license for presenting the content to the presentation device 100. For example, the method may be performed by the node 200 (e.g., by the computer system 200 implementing the node).

In the following, further details with respect to the apparatus 20, the device 20, the node 200, the method, and a corresponding computer program will be introduced with reference to the apparatus 20 and the presentation device 200. Features introduced with reference to the apparatus 20 and/or node 200 may likewise be included in the corresponding device 20, method and computer program.

While Figs. 1a to 1b relate to a presentation device that presents content, Figs. 2a and 2b relate to the entity that provides the licenses required for presenting the content. In the proposed concept, this is done in a decentralized manner, with every content creator being able to set up a licensing entity on the blockchain network, using decentralized application. Accordingly, as a basis of providing the licenses, the processor circuitry hosts the decentralized application 2 for managing licenses for content. For example, the decentralized application is hosted on the blockchain network 205, with the blockchain of the blockchain network 205 being used to log various activities of the decentralized application, such as a proof of licenses being granted.

As outlined in connection with Figs. 1a and 1b, in some cases, the content being presented references the license(s) required for presenting the content using a smart contract. In other words, the at least one license may be defined in a smart contract associated with the content, the smart contract referencing the license. Such a smart contract for referencing the at least one license may be set up by the decentralized application. For example, the processor circuitry may set up the smart contract. Accordingly, as further shown in Fig. 2b, the method may comprise setting 220 up the smart contract. For example, as shown in Fig. 4, the smart contract may be set up by a dApp of the content provider providing the content, or by a dApp of a mash-up artist providing a mash-up of content of other content providers. In the latter case, the dApp of the mash-up artist may propose a smart contract referencing the licenses (and a sharing agreement regarding payment/royalties) and open up a dispute period. During the dispute period, the content providers of the content used by the mash-up artist can dispute the smart contract. The dApp of the mash-up artist can then modify the smart contract until the various content providers agree to the smart contract. In summary, the processor circuitry may handle at least one dispute of one or more content providers by modifying the smart contracts until a consensus on the smart contract is established (between the mash-up artist and the content provider(s), for example). Accordingly, as further shown in Fig. 2b, the method may comprise handling 225 at least one dispute of one or more content providers by modifying the smart contracts until a consensus on the smart contract is established. For example, the processor circuitry may propose the smart contract to the one or more content providers via a separate Layer 2 blockchain (e.g., a blockchain being different from the blockchain, on which the distributed application is hosted).

The processor circuitry may then obtain, from the content presentation device 100, the request for at least one license for presenting content, process the request using the dApp, and provide, using the dApp, the at least one license. For example, prior to providing the license, the processor circuitry may perform a remote attestation procedure, to ensure that the at least one license, and in particular decryption key(s) for decrypting the content, are being handled by a TEE of the content presentation device. After performing the remote attestation procedure, the dApp can trust the presentation device and provide a decryption key held by the dApp (e.g., within a TEE of the node) to the presentation device.

In some cases, the dApp may act as aggregator of multiple licenses of multiple content providers. For example, the processor circuitry may provide, using the decentralized application 2, if the content comprises components from two or more content providers, a license from each of the two or more content providers. This may reduce the effort required by the presentation device for obtaining the multiple licenses.

One major factor in using blockchain technology for the purpose of licensing is the inherent accountability of the blockchain system, in which third parties can verify transactions on the blockchain. Therefore, transactions, such as providing the at least one license, and/or setting up the smart contract, may be logged on the blockchain. For example, the processor circuitry may log at least one aspect of the licenses managed by the decentralized application (such as provision of the at least one license and/or setting up the smart contract on the blockchain hosted by the blockchain network. Accordingly, as further shown in Fig. 2b, the method may comprise logging 260 at least one aspect of the licenses managed by the decentralized application on the blockchain hosted by the blockchain network.

In some examples, the decentralized application may further obtain usage information on usage of the content from the presentation device, and, if the content is provided by a content provider being different from the entity hosting the dApp, forward the usage information to the content provider.

The interface circuitry 22 or means for communicating 22 may correspond to one or more inputs and/or outputs for receiving and/or transmitting information, which may be in digital (bit) values according to a specified code, within a module, between modules or between modules of different entities. For example, the interface circuitry 22 or means for communicating 22 may comprise circuitry configured to receive and/or transmit information.

For example, the processor circuitry 24 or means for processing 24 may be implemented using one or more processing units, one or more processing devices, any means for processing, such as a processor, a computer or a programmable hardware component being operable with accordingly adapted software. In other words, the described function of the processor circuitry 24 or means for processing may as well be implemented in software, which is then executed on one or more programmable hardware components. Such hardware components may comprise a general-purpose processor, a Digital Signal Processor (DSP), a micro-controller, etc.

For example, the memory or storage circuitry 26 or means for storing information 26 may a volatile memory, e.g., random access memory, such as dynamic random-access memory (DRAM), and/or comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

More details and aspects of the apparatus 20, device 20, method, a corresponding computer program and the node 200 are mentioned in connection with the proposed concept or one or more examples described above or below (e.g., Fig. 1a to 1b, 3 to 5). The apparatus 20, device 20, method, corresponding computer program and node 200 may comprise one or more additional optional features corresponding to one or more aspects of the proposed concept, or one or more examples described above or below.

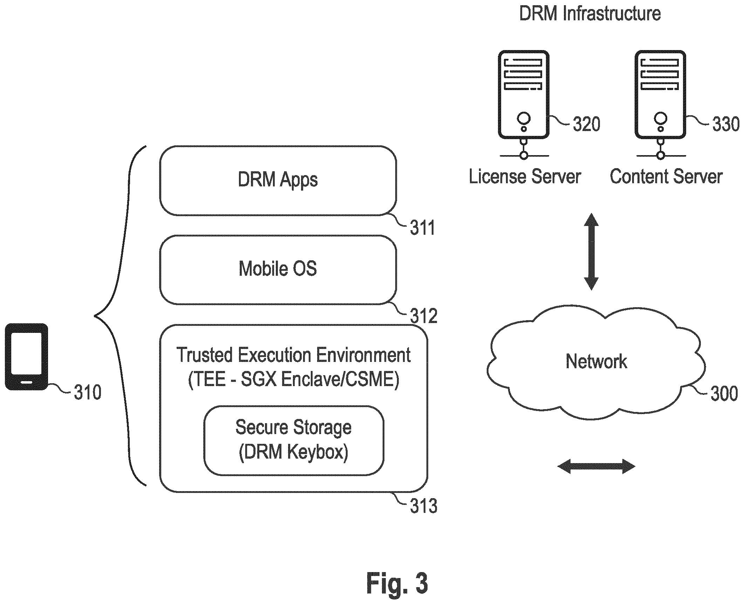

Today's Web2.0 based DRM/ERM (Enterprise Rights Management) is centralized in terms content, license, and provisioning. Fig. 3 shows a schematic diagram of a centralized DRM licensing approach. Fig. 3 shows a mobile device 310, which executes DRM apps 311 on top of a mobile operating system (OS) 312. It uses a Trusted Execution Environment (TEE) 313, such as Intel^{®} SGX Enclave/ Converged Security and Management Engine (CSME), as secure storage to host a DRM key box. A license server 320 is used for license acquisition and sending content keys to the device (via a network 300), while a content server 330 is used to send the content. Such a centralized approach is not scalable towards embracing the Web 3.0 de-centralized approach, which supports user generated content in addition to studio generated content.

The present disclosure proposed a concept for "DRM for Web 3.0 (DRMW3.0)" that provides improved scalability with respect to decentralized Web 3.0 applications. In the proposed concept, Peer-to-Peer DRM is provided for content authoring, publishing, and subscribing, e.g., using Web 3.0 Wallet provisioned credentials and/or via a block chain/distributed consensus mechanism. In some examples, this involves capabilities for participant DApps (Distributed Applications) to provision, revoke, manage dynamic license & key management along with an audit trail tracked in a public ledger. Backward compatibility with Web 2.0 based centralized DRM may be provided along with Web 3.0 based distributed DRM. Platform TEE may be used to have hybrid wallet for keys/licenses across both for seamless operation across geo-fenced regions using different standards (e.g., US vs. Europe vs. Asia & Pacific). Failover due to geopolitical constraints or failover due to network/physical constraints/limitations (e.g., DNS/Firewall) may be handled gracefully. Hetero block chain scalability may be provided via layer 2 interoperability across the different domains and sub-nets for both centralized and distributed approaches.

Fig. 4 shows a high-level schematic diagram of an example of a use case supported by the proposed system architecture including use of Web 3.0 DApps across the distributed user generated content with Web 3.0 block chain support. In Fig. 4, a license server DApp 410 is shown, which manages and provides DRM licenses via a Challenge/Response Protocol. A Clearing House DApp 420 is used to manage micropayments and metadata payments/credits), e.g., using homomorphic encryption. A primary mash-up artist uses a DApp 430 to communicate with the license server DApp 410 and the Clearing House DApp 420 and provides content to a DApp 440 of a secondary mash-up artist, which further uses the DApp 440 to communicate with the license server DApp 410 and the Clearing House DApp 420 and to provide content to a DApp 450 of a tertiary mash-up artist, which further uses the DApp 450 to communicate with the license server DApp 410 and the Clearing House DApp 420 and to display the result on a display device, such as a display 460, a smartphone 470 or a head-mounted display (e.g., virtual reality goggles) 480.

Content display technologies support the ability to track user behaviors interacting with content (how many plays, rewinds, and fast forwards etc....). Viewing behavior metadata can be fed back to the content owner. However, in conventional, centralized licensing settings, content snippets as part of mashup content cannot track viewer behavior spanning multiple mashups and social sharing. Additionally, contextual metadata useful in determining what might cause a content snippet to become viral is also not collected on a per-snippet basis through mashups. In the present case, this aspect can be realized, e.g., through the Clearing House DApp 420.

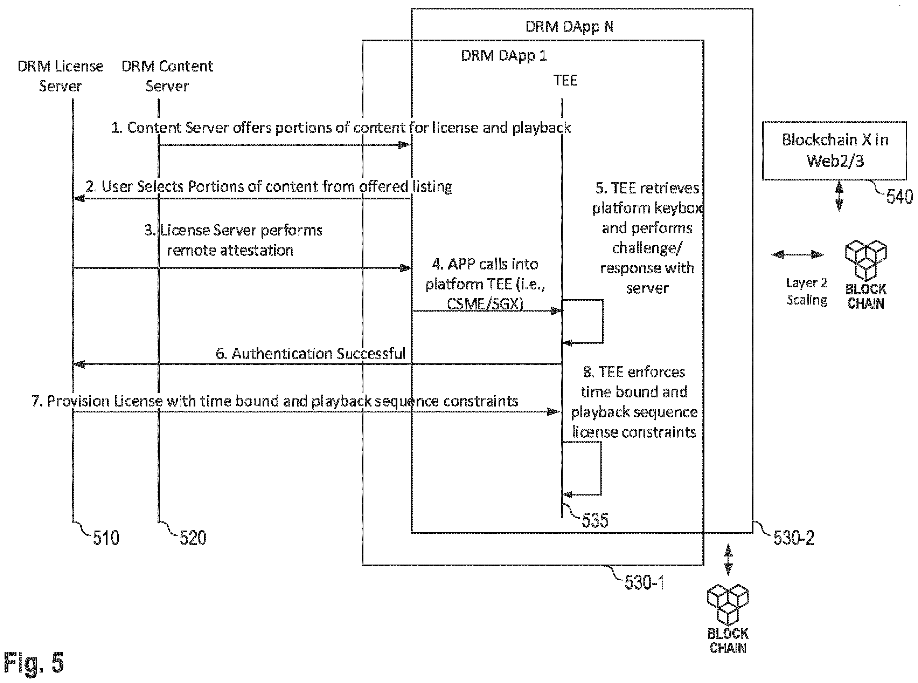

Fig. 5 shows a flow diagram of a DRM license/content key provisioning flow that supports Web 3.0 based decentralized peer to peer license/key management as well as backward compatibility with a Web 2.0 centralized approach. Fig. 5 shows a DRM license server 510, a DRM content server 520, and DRM DApps 1-N 530-1 - 530-N. The DRM DApps use a TEE 535. The DRM DApps communicate with a blockchain. Layer 2 scaling is achieved via Blockchain X 540 in Web2/3. At 1, the DRM content server 520 offers portions of content for licensing a playback. At 2, the user selects portions of content from the offered listing and communicates with the DRM license server 510. At 3, the DRM license server performs remote attestation. At 4, the app calls into the platform TEE (e.g., CSME/SGX). At 5, the TEE retrieves the platform key box and performs challenge/response with the server. At 6, successful authentication is confirmed to the DRM license server. At 7, the DRM license server provisions license with time-bound and playback sequence constraints. At 8, the TEE enforces the time-bound and playback sequence license constraints. Given that there may exist content/licensing restrictions that lead to differences across different geographic regions, encryption schemes, etc., various examples of the proposed concept may leverage blockchain layer 2 co-ordination for off-block chain offline transactions for efficiency and support for heterogeneous block chain schemes as well. (Fig. 6 provides an example L2 Layer Interaction).

In some cases, layer 2-enhancements may be used for off-chain processing and heterogeneous blockchains. For example, a smart contract for licensing across different licensors may be created. For example, a validator creates a smart contract and performs rollup transactions. If there are no disputes from the licensors, after the dispute period ends, the rollup transactions are finalized. If a user submits an invalid fault proof, the smart contract rejects the fault proof, and the dispute period continues. After the dispute period ends, the rollup transactions are finalized. If a user submits a valid fault proof, the smart contract verifies the proof, slashes the validator state, requires a new state change proposal, and refers back to the validator, which submits state changes to the rollup smart contract.

Various examples provide decentralized Web3-based peer-to-peer content & key license management. Examples may provide a seamless transition from legacy DRM centralized systems to fully distributed ones, and the corresponding fallback to previous technology in case of any availability issues or interoperability across different DRM schemes. This is an important aspect considering reliability and resiliency, needed for security and also for service continuity (e.g., for streaming).

In the following, some examples of the proposed concept are presented:
An example (e.g., example 1) relates to an apparatus (10) for presenting content, the apparatus comprising interface circuitry (12), machine-readable instructions, and processor circuitry (14) to execute the machine-readable instructions to obtain the content. The processor circuitry (14) is to execute the machine-readable instructions to obtain, from at least one de-centralized application (2) referenced by the content, at least one license for using the content. The processor circuitry (14) is to execute the machine-readable instructions to present the content in accordance with the at least one license.

Another example (e.g., example 2) relates to a previously described example (e.g., example 1) or to any of the examples described herein, further comprising that the processor circuitry is to execute the machine-readable instructions to obtain the content from a content server (1), and to obtain the at least one license from at least one decentralized application (2) hosted by at least one node (200) of at least one blockchain network (205).

Another example (e.g., example 3) relates to a previously described example (e.g., example 2) or to any of the examples described herein, further comprising that the processor circuitry is to execute the machine-readable instructions to obtain, if two or more licenses are to be obtained, the two or more licenses from two or more decentralized applications (2a; 2b) hosted by nodes (200a; 200b) of at least two different blockchain networks (205a; 205b).

Another example (e.g., example 4) relates to a previously described example (e.g., example 2) or to any of the examples described herein, further comprising that the processor circuitry is to execute the machine-readable instructions to obtain, if two or more licenses are to be obtained, the two or more licenses from two or more decentralized applications (2b; 2c) hosted by nodes (200b; 200c) of the same blockchain network (205b).

Another example (e.g., example 5) relates to a previously described example (e.g., one of the examples 2 to 4) or to any of the examples described herein, further comprising that the processor circuitry is to execute the machine-readable instructions to obtain, if two or more licenses are to be obtained, at least two licenses from the same decentralized application (2a; 2b; 2c).

Another example (e.g., example 6) relates to a previously described example (e.g., one of the examples 1 to 5) or to any of the examples described herein, further comprising that the processor circuitry is to execute the machine-readable instructions to obtain the content from a decentralized application hosted by a content server (1).

Another example (e.g., example 7) relates to a previously described example (e.g., one of the examples 1 to 6) or to any of the examples described herein, further comprising that the processor circuitry is to execute the machine-readable instructions to obtain, if the content comprises components from two or more content providers, a license from each of the two or more content providers.

Another example (e.g., example 8) relates to a previously described example (e.g., example 7) or to any of the examples described herein, further comprising that the licenses obtained from the two or more content providers are defined in a smart contract associated with the content, the smart contract referencing the licenses.

Another example (e.g., example 9) relates to a previously described example (e.g., one of the examples 7 to 8) or to any of the examples described herein, further comprising that the processor circuitry is to execute the machine-readable instructions to provide usage information on usage of the content to each of the two or more content providers.

Another example (e.g., example 10) relates to a previously described example (e.g., one of the examples 1 to 9) or to any of the examples described herein, further comprising that the processor circuitry is to execute the machine-readable instructions to host a decentralized application, and to perform at least the act of obtaining the at least one license for using the content using the decentralized application.

Another example (e.g., example 11) relates to a previously described example (e.g., one of the examples 1 to 10) or to any of the examples described herein, further comprising that the processor circuitry is to execute the machine-readable instructions to obtain the at least one license, if the at least one decentralized application is inaccessible, from a web server or application server as a fallback mechanism.

Another example (e.g., example 12) relates to a previously described example (e.g., one of the examples 1 to 11) or to any of the examples described herein, further comprising that the at least one license is at least one of time-limited and usage-limited.

An example (e.g., example 13) relates to an apparatus (20) for a node (200) of a blockchain network (205), the apparatus comprising interface circuitry (22), machine-readable instructions and processor circuitry (24) to execute the machine-readable instructions to host a decentralized application (2) for managing licenses for content. The processor circuitry (24) is to execute the machine-readable instructions to obtain, from a content presentation device (100), a request for at least one license for presenting content. The processor circuitry (24) is to execute the machine-readable instructions to process, using the decentralized application, the request for the at least one license for presenting the content. The processor circuitry (24) is to execute the machine-readable instructions to provide, using the decentralized application, the at least one license for presenting the content to the presentation device (100).

Another example (e.g., example 14) relates to a previously described example (e.g., example 13) or to any of the examples described herein, further comprising that the processor circuitry is to execute the machine-readable instructions to log at least one aspect of the licenses managed by the decentralized application on a blockchain hosted by the blockchain network.

Another example (e.g., example 15) relates to a previously described example (e.g., one of the examples 13 to 14) or to any of the examples described herein, further comprising that the processor circuitry is to execute the machine-readable instructions to provide, using the decentralized application (2), if the content comprises components from two or more content providers, a license from each of the two or more content providers.

Another example (e.g., example 16) relates to a previously described example (e.g., one of the examples 13 to 15) or to any of the examples described herein, further comprising that the at least one license is defined in a smart contract associated with the content, the smart contract referencing the license.

Another example (e.g., example 17) relates to a previously described example (e.g., example 16) or to any of the examples described herein, further comprising that the processor circuitry is to execute the machine-readable instructions to set up the smart contract.

An example (e.g., example 18) relates to a previously described example (e.g., example 17) or to any of the examples described herein, further comprising that the processor circuitry is to execute the machine-readable instructions to handle at least one dispute of one or more content providers by modifying the smart contracts until a consensus on the smart contract is established.

An example (e.g., example 19) relates to an apparatus (10) for presenting content, the apparatus comprising processor circuitry (14) configured to obtain the content. The processor circuitry is configured to obtain, from at least one decentralized application (2) referenced by the content, at least one license for using the content. The processor circuitry is configured to present the content in accordance with the at least one license.

An example (e.g., example 20) relates to an apparatus (20) for a node (200) of a blockchain network (205), the apparatus comprising processor circuitry (24) configured to host a decentralized application (2) for managing licenses for content. The processor circuitry is configured to obtain, from a content presentation device (100), a request for at least one license for presenting content. The processor circuitry is configured to process, using the decentralized application, the request for the at least one license for presenting the content. The processor circuitry is configured to provide, using the decentralized application, the at least one license for presenting the content to the presentation device (100).

An example (e.g., example 21) relates to a device (10) for presenting content, the device comprising means for processing (14) for obtaining the content. The device (10) comprises obtaining, from at least one decentralized application (2) referenced by the content, at least one license for using the content. The device (10) comprises presenting the content in accordance with the at least one license.

An example (e.g., example 22) relates to a device (20) for a node (200) of a blockchain network (205), the device comprising means for processing (24) for hosting a decentralized application (2) for managing licenses for content. The device (20) comprises obtaining, from a content presentation device (100), a request for at least one license for presenting content. The device (20) comprises processing, using the decentralized application, the request for the at least one license for presenting the content. The device (20) comprises providing, using the decentralized application, the at least one license for presenting the content to the presentation device (100).

An example (e.g., example 23) relates to a method for presenting content, the method comprising obtaining (120) the content. The method comprises obtaining (130), from at least one decentralized application (2) referenced by the content, at least one license for using the content. The method comprises presenting (140) the content in accordance with the at least one license.

Another example (e.g., example 24) relates to a previously described example (e.g., example 23) or to any of the examples described herein, further comprising that the method comprises obtaining (120) the content from a content server (1) and obtaining (130) the at least one license from at least one decentralized application (2) hosted by at least one node (200) of at least one blockchain network (205).

Another example (e.g., example 25) relates to a previously described example (e.g., example 24) or to any of the examples described herein, further comprising that the method comprises obtaining (130), if two or more licenses are to be obtained, the two or more licenses from two or more decentralized applications (2a; 2b) hosted by nodes (200a; 200b) of at least two different blockchain networks (205a; 205b).

Another example (e.g., example 26) relates to a previously described example (e.g., example 24) or to any of the examples described herein, further comprising that the method comprises obtaining (130), if two or more licenses are to be obtained, the two or more licenses from two or more decentralized applications (2b; 2c) hosted by nodes (200b; 200c) of the same blockchain network (205b).

Another example (e.g., example 27) relates to a previously described example (e.g., one of the examples 24 to 26) or to any of the examples described herein, further comprising that the method comprises obtaining (130), if two or more licenses are to be obtained, at least two licenses from the same decentralized application (2a. The method comprises 2b. The method comprises 2c).

Another example (e.g., example 28) relates to a previously described example (e.g., one of the examples 23 to 27) or to any of the examples described herein, further comprising that the method comprises obtaining (120) the content from a decentralized application hosted by a content server (1).

Another example (e.g., example 29) relates to a previously described example (e.g., one of the examples 23 to 28) or to any of the examples described herein, further comprising that the method comprises obtaining (130), if the content comprises components from two or more content providers, a license from each of the two or more content providers.

Another example (e.g., example 30) relates to a previously described example (e.g., example 29) or to any of the examples described herein, further comprising that the licenses obtained from the two or more content providers are defined in a smart contract associated with the content, the smart contract referencing the license.

Another example (e.g., example 31) relates to a previously described example (e.g., one of the examples 29 to 30) or to any of the examples described herein, further comprising that the method comprises providing (150) usage information on usage of the content to each of the two or more content providers.

Another example (e.g., example 32) relates to a previously described example (e.g., one of the examples 23 to 31) or to any of the examples described herein, further comprising that the method comprises hosting (110) a decentralized application and performing at least the act of obtaining the at least one license for using the content using the decentralized application.

Another example (e.g., example 33) relates to a previously described example (e.g., one of the examples 23 to 32) or to any of the examples described herein, further comprising that the method comprises obtaining (135) the at least one license, if the at least one decentralized application is inaccessible, from a web server or application server as a fallback mechanism.

Another example (e.g., example 34) relates to a previously described example (e.g., one of the examples 23 to 33) or to any of the examples described herein, further comprising that the at least one license is at least one of time-limited and usage-limited.

An example (e.g., example 35) relates to a method for a node (200) of a blockchain network (205), the method comprising hosting (210) a decentralized application (2) for managing licenses for content. The method comprises obtaining (230), from a content presentation device (100), a request for at least one license for presenting content. The method comprises processing (240), using the decentralized application, the request for the at least one license for presenting the content. The method comprises providing (250), using the decentralized application, the at least one license for presenting the content to the presentation device (100).

Another example (e.g., example 36) relates to a previously described example (e.g., example 35) or to any of the examples described herein, further comprising that the method comprises logging (260) at least one aspect of the licenses managed by the decentralized application on a blockchain hosted by the blockchain network.

Another example (e.g., example 37) relates to a previously described example (e.g., one of the examples 35 to 36) or to any of the examples described herein, further comprising that the method comprises providing (250), using the decentralized application (2), if the content comprises components from two or more content providers, a license from each of the two or more content providers.

Another example (e.g., example 38) relates to a previously described example (e.g., one of the examples 35 to 37) or to any of the examples described herein, further comprising that the at least one license is defined in a smart contract associated with the content, the smart contract referencing the license.

Another example (e.g., example 39) relates to a previously described example (e.g., example 38) or to any of the examples described herein, further comprising that the method comprises setting (220) up the smart contract.

An example (e.g., example 40) relates to a previously described example (e.g., example 39) or to any of the examples described herein, wherein the method comprises handling (225) at least one dispute of one or more content providers by modifying the smart contracts until a consensus on the smart contract is established.

An example (e.g., example 41) relates to a computer system (100) comprising the apparatus (10) according to one of the examples 1 to 12 (or according to any other example), the apparatus (10) according to example 19 (or according to any other example) or the device (10) according to example 21 (or according to any other example).

An example (e.g., example 42) relates to a mobile device (100) comprising the apparatus (10) according to one of the examples 1 to 12 (or according to any other example), the apparatus (10) according to example 19 (or according to any other example) or the device (10) according to example 21 (or according to any other example).

An example (e.g., example 43) relates to a content presentation device (100) comprising the apparatus (10) according to one of the examples 1 to 12 (or according to any other example), the apparatus (10) according to example 19 (or according to any other example) or the device (10) according to example 21 (or according to any other example).

An example (e.g., example 44) relates to a computer system (200) comprising the apparatus (20) according to one of the examples 13 to 18 (or according to any other example), the apparatus (20) according to example 20 (or according to any other example) or the device (20) according to example 22 (or according to any other example), wherein the computer system (200) is the node of the blockchain network (205).

An example (e.g., example 45) relates to a computer system (100) being configured to perform the method according to one of the examples 23 to 34 (or according to any other example).

An example (e.g., example 46) relates to a mobile device (100) being configured to perform the method according to one of the examples 23 to 34 (or according to any other example).

An example (e.g., example 47) relates to a presentation device (100) being configured to perform the method according to one of the examples 23 to 34 (or according to any other example).

An example (e.g., example 48) relates to a computer system (200) being configured to perform the method according to one of the examples 35 to 40 (or according to any other example), wherein the computer system (200) is the node of the blockchain network (205).

An example (e.g., example 49) relates to a system comprising the apparatus (10) or device (10) according to one of the examples 1 to 12, 19 or 21 (or according to any other example) and the apparatus (20) or device (20) according to one of the examples 13 to 18, 20 or 22 (or according to any other example).

An example (e.g., example 50) relates to a non-transitory machine-readable storage medium including program code, when executed, to cause a machine to perform the method of one of the examples 23 to 34 (or according to any other example) or the method of one of the examples 35 to 40 (or according to any other example).

An example (e.g., example 51) relates to a computer program having a program code for performing the method of one of the examples 23 to 34 (or according to any other example) or the method of one of the examples 35 to 40 (or according to any other example) when the computer program is executed on a computer, a processor, or a programmable hardware component.

An example (e.g., example 52) relates to a machine-readable storage including machine readable instructions, when executed, to implement a method or realize an apparatus as claimed in any pending claim or shown in any example.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor, or other programmable hardware component. Thus, steps, operations, or processes of different ones of the methods described above may also be executed by programmed computers, processors, or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations, or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process, or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

As used herein, the term "module" refers to logic that may be implemented in a hardware component or device, software or firmware running on a processing unit, or a combination thereof, to perform one or more operations consistent with the present disclosure. Software and firmware may be embodied as instructions and/or data stored on non-transitory computer-readable storage media. As used herein, the term "circuitry" can comprise, singly or in any combination, non-programmable (hardwired) circuitry, programmable circuitry such as processing units, state machine circuitry, and/or firmware that stores instructions executable by programmable circuitry. Modules described herein may, collectively or individually, be embodied as circuitry that forms a part of a computing system. Thus, any of the modules can be implemented as circuitry. A computing system referred to as being programmed to perform a method can be programmed to perform the method via software, hardware, firmware, or combinations thereof.

Any of the disclosed methods (or a portion thereof) can be implemented as computer-executable instructions or a computer program product. Such instructions can cause a computing system or one or more processing units capable of executing computer-executable instructions to perform any of the disclosed methods. As used herein, the term "computer" refers to any computing system or device described or mentioned herein. Thus, the term "computer-executable instruction" refers to instructions that can be executed by any computing system or device described or mentioned herein.

The computer-executable instructions can be part of, for example, an operating system of the computing system, an application stored locally to the computing system, or a remote application accessible to the computing system (e.g., via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any particular computer system or type of hardware.

Furthermore, any of the software-based examples (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

The disclosed methods, apparatuses, and systems are not to be construed as limiting in any way. Instead, the present disclosure is directed toward all novel and nonobvious features and aspects of the various disclosed examples, alone and in various combinations and subcombinations with one another. The disclosed methods, apparatuses, and systems are not limited to any specific aspect or feature or combination thereof, nor do the disclosed examples require that any one or more specific advantages be present, or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus for presenting content, the apparatus comprising interface circuitry, machine-readable instructions, and processor circuitry to execute the machine-readable instructions to:
obtain the content from a content server;
obtain, from at least one decentralized application referenced by the content, at least one license for using the content, the at least one decentralized application being hosted by at least one node of at least one blockchain network; and
present the content in accordance with the at least one license.

2. The apparatus according to claim 1, wherein the processor circuitry is to execute the machine-readable instructions to obtain, if two or more licenses are to be obtained, the two or more licenses from two or more decentralized applications hosted by nodes of at least two different blockchain networks.

3. The apparatus according to one of the previous claims, wherein the processor circuitry is to execute the machine-readable instructions to obtain, if two or more licenses are to be obtained, the two or more licenses from two or more decentralized applications hosted by nodes of the same blockchain network.

4. The apparatus according to one of the previous claims, wherein the processor circuitry is to execute the machine-readable instructions to obtain, if two or more licenses are to be obtained, at least two licenses from the same decentralized application.

5. The apparatus according to one of the previous claims, wherein the processor circuitry is to execute the machine-readable instructions to obtain the content from a decentralized application hosted by a content server.

6. The apparatus according to one of the previous claims, wherein the processor circuitry is to execute the machine-readable instructions to obtain, if the content comprises components from two or more content providers, a license from each of the two or more content providers.

7. The apparatus according to claim 6, wherein the licenses obtained from the two or more content providers are defined in a smart contract associated with the content, the smart contract referencing the licenses.

8. The apparatus according to claim 6 or 7, wherein the processor circuitry is to execute the machine-readable instructions to provide usage information on usage of the content to each of the two or more content providers.

9. The apparatus according to one of the previous claims, wherein the processor circuitry is to execute the machine-readable instructions to host a decentralized application, and to perform at least the act of obtaining the at least one license for using the content using the decentralized application.

10. The apparatus according to one of the previous claims, wherein the processor circuitry is to execute the machine-readable instructions to obtain the at least one license, if the at least one decentralized application is inaccessible, from a web server or application server as a fallback mechanism.

11. The apparatus according to one of the previous claims, wherein the at least one license is at least one of time-limited and usage-limited.

12. An apparatus for a node of a blockchain network, the apparatus comprising interface circuitry, machine-readable instructions and processor circuitry to execute the machine-readable instructions to:
host a decentralized application for managing licenses for content;
obtain, from a content presentation device, a request for at least one license for presenting content;
process, using the decentralized application, the request for the at least one license for presenting the content; and
provide, using the decentralized application, the at least one license for presenting the content to the presentation device.

13. The apparatus according to claim 12, wherein the processor circuitry is to execute the machine-readable instructions to log at least one aspect of the licenses managed by the decentralized application on a blockchain hosted by the blockchain network.

14. A method for presenting content, the method comprising:
obtaining the content from a content server;
obtaining, from at least one decentralized application referenced by the content, at least one license for using the content, the at least one decentralized application being hosted by at least one node of at least one blockchain network; and
presenting the content in accordance with the at least one license.

15. A non-transitory machine-readable storage medium including program code, when executed, to cause a machine to perform the method of one of the claims 14.
